Europäisches Patentamt

European Patent Office

Office européen des brevets

(11) Publication number: **0 362 403**
**A1**

## (12) EUROPEAN PATENT APPLICATION
## published in accordance with Art. 158(3) EPC

(21) Application number: 89903257.7

(22) Date of filing: 03.03.89

(86) International application number:
PCT/JP89/00228

(87) International publication number:
WO 89/09445 (05.10.89 89/24)

(51) Int. Cl.⁵: **G06F 12/16 , G06F 15/16**

(30) Priority: 25.03.88 JP 71536/88

(43) Date of publication of application:
**11.04.90 Bulletin 90/15**

(84) Designated Contracting States:
**DE FR GB IT**

(71) Applicant: **FANUC LTD**
**3580, Shibokusa Aza-Komanba Oshino-mura**
**Minamitsuru-gun Yamanashi 401-05(JP)**

(72) Inventor: **SEKI, Masaki**
**3-15-2-406, Takaido-nishi**
**Suginami-ku Tokyo 168(JP)**
Inventor: **TAKEGAHARA, Takashi**
**256-2, Nishiterakata-cho**
**Hachioji-shi Tokyo 192-01(JP)**
Inventor: **MORISAKI, Kazuhiko**
**3329-1, Funazu Kawaguchiko-cho**
**Minamitsuru-gun Yamanashi 401-05(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

(54) METHOD OF SAVING A SYSTEM PROGRAM.

(57) In response to a save request of a system program, the save program on the side of an additional CPU (12) transfers part of its own system program (SPRₛ) from a RAM (12b) to a shared RAM (13) and then requests a main system (11) to send the system program to an external storage (11f). Upon receipt of this, the CPU (11a) on the main system side sends the system program on the shared RAM (13) as simple data to the external storage (11f). Thereafter, the processing is repeated, and the system program (SPRₛ) on the side of the additional CPU (12) is saved on the external storage (11f).

FIG. 1

DESCRIPTION

METHOD OF SAVING SYSTEM PROGRAM

Technical Field

This invention relates to a method of saving a system program and, more particularly, to a method of saving, in an external memory device, the system program of each processor in a system comprising a plurality of processors.

Background Art

There are cases where separate CPU boards are added to the main system of a computer configuration in order to extend the functions of the configuration. The conventional practice in such cases is to provide a ROM for every CPU and store an initializing program in each ROM for the purpose of executing diagnostic and loading processing immediately after the introduction of power.

Once a ROM is fabricated, however, it cannot be modified unless it is made anew. Consequently, in order to eliminate problems from a program in a ROM or improve the program, the only method available is to replace the ROM itself in the course of development or after the apparatus is shipped. This is inconvenient in terms of maintenance and development. In particular, when separate CPU boards are added to a main system, it is often necessary to effect program modification with regard to the ROM's on the separate ROM boards.

The inventor of the present application has proposed, as Japanese Patent Application No. 63-48873 (filed on March 2, 1988), a system program loading method whereby, when separate CPU boards are added to a main system, system programs for the supplementary CPU's can be loaded without providing each separate CPU board with a ROM.

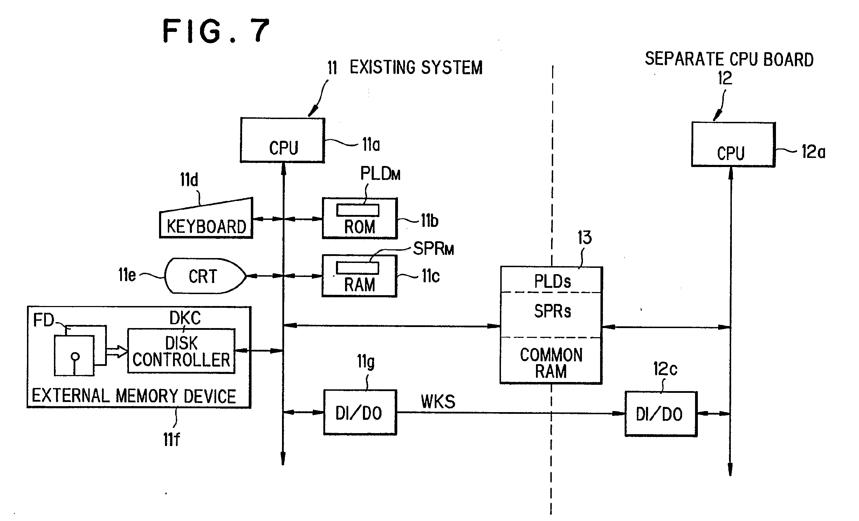

Fig. 7 is a block diagram of a system which adopts this proposed method. In Fig. 7, numeral 11 denotes an existing system (main system) of a computer configuration, the system including a processor (CPU) 11a, a ROM 11b in which an initializing program $PLD_M$ is stored, a RAM 11c, a keyboard 11d, a display unit 11e, an external memory device 11f equipped with a disk controller DKC, a floppy disk (FD) and the like, and a DI/DO circuit 11g. Stored on the FD are system programs $SPR_M$, $SPR_S$ for the main system and a supplementary CPU, and an initializing program $PLD_S$ for the supplementary CPU.

Numeral 12 denotes a separate CPU board, which includes a separate CPU board processor (CPU) 12a, and a DI/DO circuit 12c. Numeral 13 designates a common RAM provided so as to be accessible by both the CPU 11a of the main system and the supplementary CPU 12a. WKS represents a wake-up signal. The common RAM 13 serves also as the ROM of the supplementary CPU.

Operation in accordance with this proposed system is as follows:

(i) The common RAM 13 is disposed on the transition address of the separate CPU 12a, and the arrangement is such that the separate CPU 12a will not start execution immediately after introduction of power.

(ii) In response to the introduction of power, the initializing program $PLD_M$ of the ROM 11b takes the system program $SPR_M$ on the side of the main system 11 from the external memory device 11f and stores it in the RAM 11c on the side of the main system, then stores the initializing program $PLD_S$ of the separate CPU (the supplementary CPU) 11a in the common RAM 13 starting from the leading address thereof and thereafter sends the wake-up signal WKS to the supplementary CPU 12a.

(iii) Upon receiving the wake-up signal WKS, the supplementary CPU 12a executes the initializing program $PLD_S$ from the beginning thereof, loads its own system program $SPR_S$ into the common RAM 13 and thereafter executes predetermined processing based on the abovementioned system program $SPR_S$.

The foregoing relates to loading of the system program. In a case where the system program is to be saved in the external memory device 11f, a saving program contained in the system program $SPR_M$ of the main system 11 responds to a save request from the keyboard 11d or the like by first saving its own system program $SPR_M$ in the external memory device 11f and then saving the supplementary CPU system program $SPR_S$, which is in the common RAM 13, in the external memory device 11f.

In accordance with this proposed method, the supplementary CPU board need not be provided with a ROM.

However, in order for the main system 11 to take charge of loading and saving of the system program $SPR_S$ of the supplementary CPU 12, it must know the memory configuration of the supplementary CPU and the file format of the system program on the floppy disk FD. This means that if the system program of the supplementary CPU is modified, then it is necessary to modify also the system program on the side of the already existing CPU. This is inconvenient.

Another problem is that the size of the RAM on the side of the supplementary CPU 12 is limited to the size of the common RAM.

Accordingly, an object of the present invention is to provide a system program saving method in which a supplementary CPU need not be provided with a ROM.

Another object of the present invention is to provide a system program saving method in which it is unnecessary for the main system to see the entire RAM area on the side of a supplementary CPU.

A further object of the present invention is to provide a system program saving method in which the RAM area on the side of a supplementary CPU can be enlarged, and in which the main system need not know the memory configuration on the side of the supplementary CPU and the configuration of the system file.

Disclosure of the Invention

In order to attain the foregoing objects, the method of saving a system program according to the present invention comprises a step of providing a common RAM so as to be accessible by both a CPU of a main system and a supplementary CPU, a step in which a saving program on the side of the supplementary CPU transfers part of the supplementary CPU's own system program from a RAM to the common RAM, a step in which the main system is requested to output the system program in the common RAM to an external memory device, and in which the CPU of the main system outputs the system program in the common RAM to the external memory device as simple data upon receiving the request, and a step of subsequently saving the system program on the side of the supplementary CPU in the external memory device by repeating the foregoing processing.

Brief Description of the Drawings

Fig. 1 is a block diagram illustrating a system according to the present invention;

Fig. 2 is a view for describing an address space of a supplementary CPU;

Fig. 3 is a diagram showing the connection between Figs. 4(A) and 4(B);

Fig. 4(A) is a flowchart of main CPU loading processing;

Fig. 4(B) is a flowchart of supplementary CPU loading processing;

Fig. 5 is a diagram showing the connection between Figs. 6(A) and 6(B);

Fig. 6(A) is a flowchart of main CPU saving processing;

Fig. 6(B) is a flowchart of supplementary CPU saving processing; and

Fig. 7 is a view for describing the construction of a previously proposed system.

Best Mode for Carrying Out the Invention

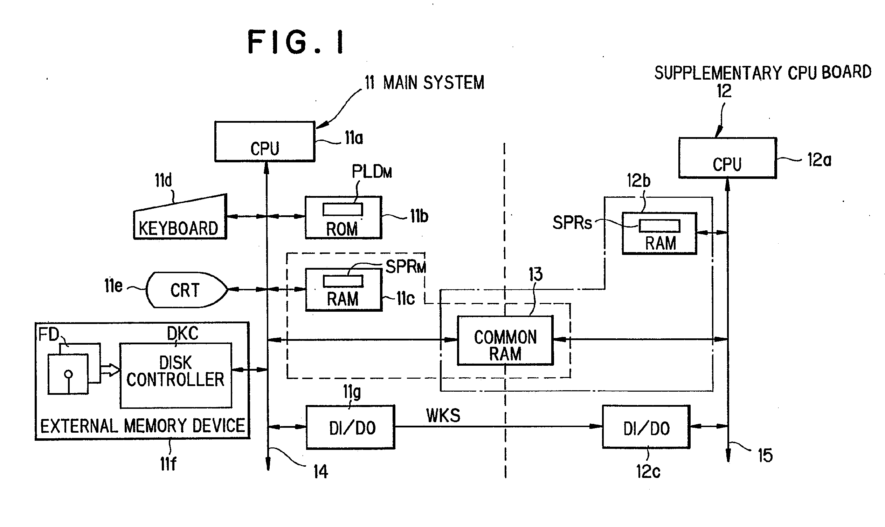

Fig. 1 is a block diagram illustrating a system according to the present invention.

Numeral 11 denotes the main system of a computer configuration, the system including a main system processor (CPU) 11a, a ROM 11b storing an initializing program (for the main system) $PLD_M$ for diagnostic/loading processing, a RAM 11c for storing a system program $SPR_M$ for the main system as well as the results of processing, a keyboard 11d, a graphic display unit (CRT) 11e, an external memory device 11f equipped with a disk controller DKC, a floppy disk (FD) and the like, and a DI/DO circuit for input/output of digital data.

Numeral 12 denotes a supplementary CPU board added to the main system 11 as for the purpose of function expansion and including a processor (CPU) 12a of the supplementary CPU, a RAM 12b for storing the system program $SPR_S$ of the supplementary CPU as well as the results of processing, and a DI/DO circuit 12c. It should be noted that the supplementary CPU board 12 is not provided with a ROM.

Numeral 13 denotes a common RAM connected to the main system 11 and to the supplementary CPU board 12 by bus lines 14, 15 and arranged so as to be accessible by each of the CPU's. The common RAM 13 is composed of a RAM, a bus arbiter for performing traffic control in response to a read/write request from each CPU, etc.

It is arranged by hardware so that the CPU 12a of the supplementary CPU board 12 will not start execution even if power is introduced, though it will start predetermined processing when the wake-up signal WKS is executed.

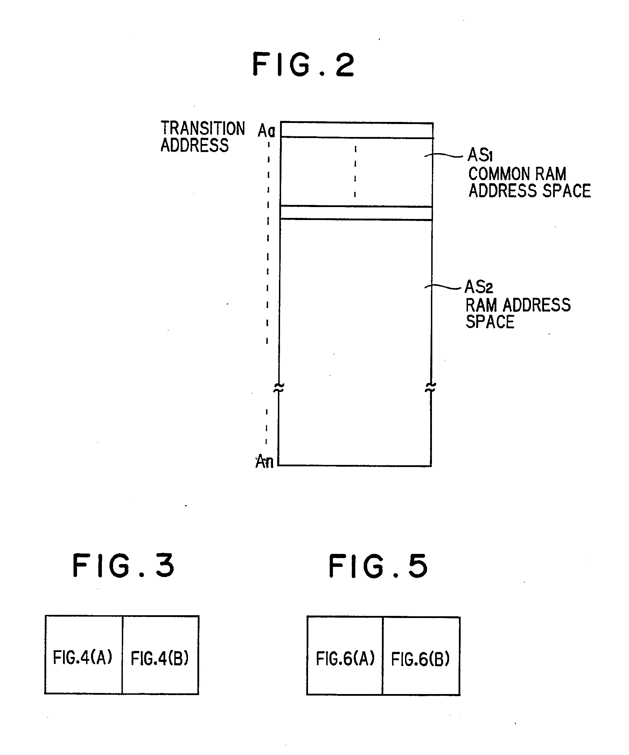

When seen from the CPU 12a of the supplementary CPU board 12, the common RAM 13 is so disposed that its leading address is the transition address. That is, though the address space of the supplementary CPU 12 is constituted by an address space $AS_1$ of the common RAM 13 and an address space $AS_2$ of the RAM 12b, as shown in Fig. 2, the CPU 12a reads commands and starts processing from the beginning of the common RAM 13 in response to execute-start enable (generation of the wake-up signal WKS).

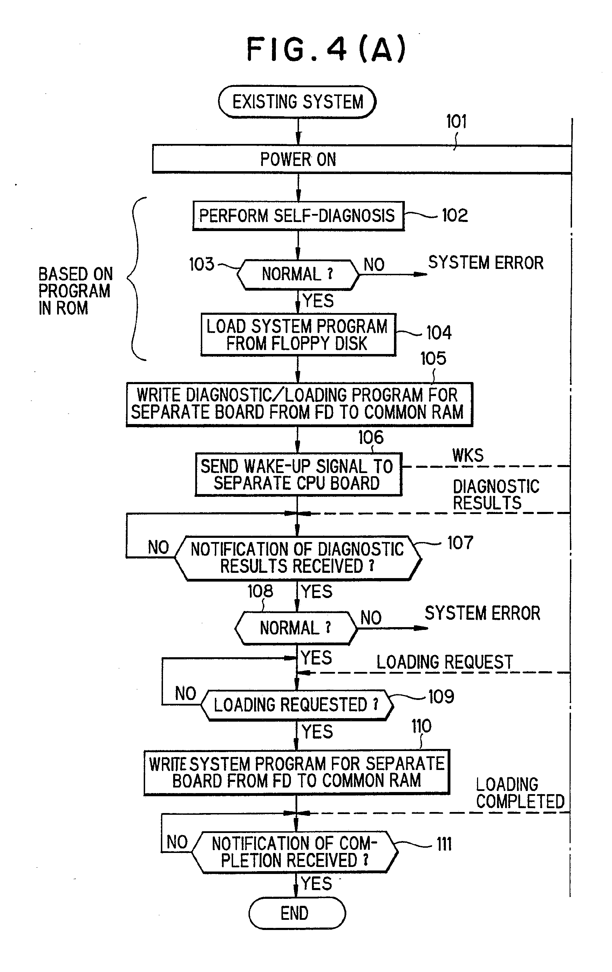

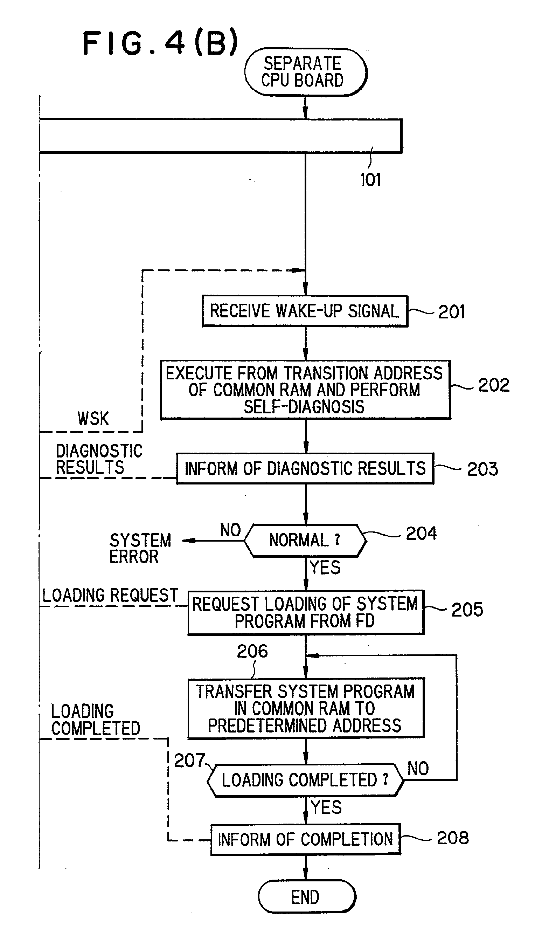

Fig. 4 is a flowchart of system program loading processing, in which (A) is a flowchart of main CPU loading processing and (B) a flowchart of supplementary CPU loading processing.

When is introduced to the main system (the existing system) 11 and the supplementary CPU board 12 (step 101), the CPU 11a on the side of the main system 11 performs diagnostic processing (step 102) based on the diagnostic/loading processing program (initializing program) PLD$_M$ stored in the ROM 11b. The CPU 12a of the supplementary CPU does not start execution of processing until the wake-up signal WKS is generated.

If an abnormality is found as the result of diagnosis, a system error occurs; if status is normal, memories are initialized and the system program SPR$_M$ of the main system is stored in the RAM 11c from the floppy disk FD of the external memory device 11f (steps 103, 104).

The CPU 11a stores the initializing program for the supplementary CPU 12a in the common RAM 13 in order starting from the leading address of the RAM (step 105), then sends the wake-up signal WKS to the supplementary CPU 12 from the DI/DO circuit 11g (step 106), and thereafter assumes a standby state (step 107) until informed of the results of self-diagnosis from the supplementary CPU board 12.

When the wake-up signal WKS arrives from the main system 11, the supplementary CPU 12a assumes, by way of hardware, an execute-enable status (step 201), reads and executes the initializing program PLD$_S$, one command at a time, from the transition address of the common RAM 13, performs diagnostic processing (step 202), and informs the main system 11 of the results via the common RAM 13 (step 203).

The main system 11 and the supplementary CPU 12 each check to see whether the diagnostic results are

normal (steps 108, 204). A system error occurs if an abnormality is found.

If the status is normal, the main system 11 assumes the standby state (step 109) until there is a loading request from the supplementary CPU 12a. Meanwhile, the supplementary CPU 12a requests the main system 11 to load its own system program $SPR_S$ via the common RAM 13 (step 205).

In response to the generation of the loading request, the CPU 11a of the main system reads the system program $SPR_S$ for the supplementary CPU out of the floppy disk FD of the external memory device 11f and stores the system program in the common RAM 13 (step 110), then assumes the standby state (step 111) until informed by the supplementary CPU 12a that loading is completed, and terminates processing when informed of completion of loading.

When its own system program SPRS has been written in the common RAM after generation of the loading request, the supplementary CPU 12a transfers the system program to the RAM 12b (steps 206, 207), informs the main system 11 of the completion of loading (step 208) in response to completion of the transfer, and terminates processing.

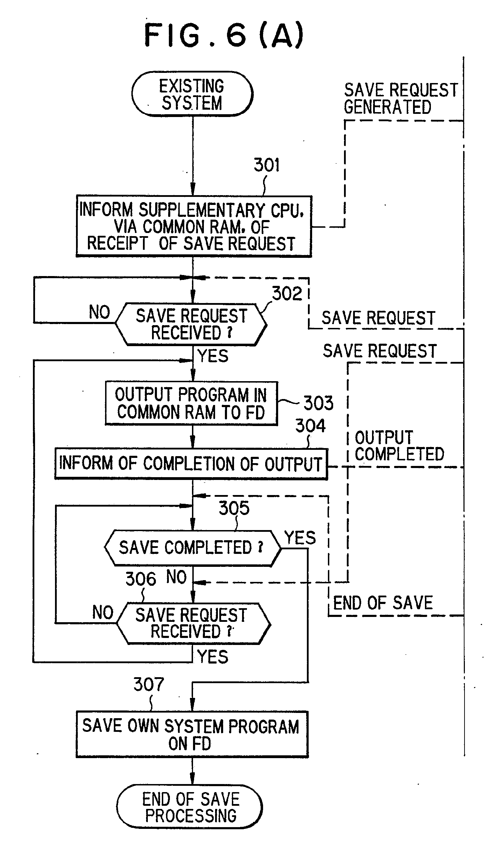

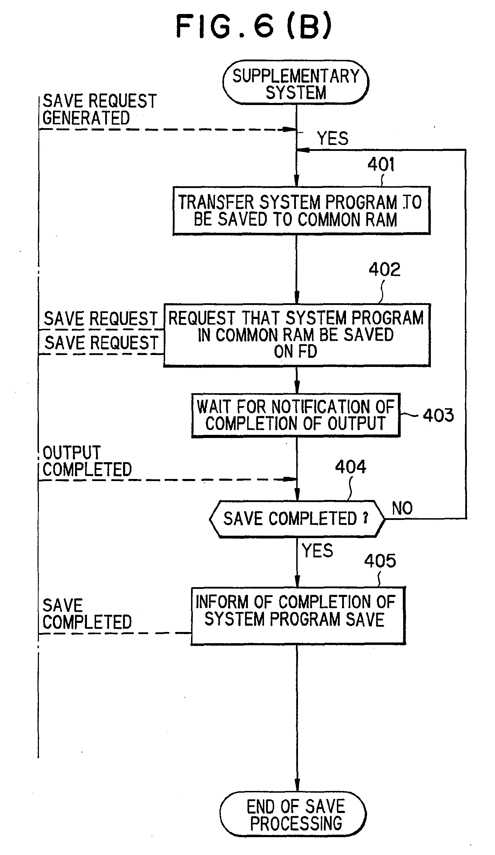

Fig. 6 is a flowchart illustrating processing for saving a system program in accordance with the invention, in which (A) is a flowchart of main CPU saving processing and (B) a flowchart of supplementary CPU saving processing.

When a system program save request is generated by the keyboard 11d or the like, the CPU 11a on the main system side informs the supplementary CPU 12a, via the common RAM 13, of the fact that a save has been requested, and then awaits a save request from the supplementary CPU 12a (steps 301, 302).

When the supplementary CPU 12a is informed by the main system 11 of the fact a save has been requested, the CPU 12a is placed under the control of the saving program, stores part of the system program $SPR_S$, which is the object of the save, in the common RAM 13 from the RAM 12c based on the saving program (step 401), requests the main system 11 to save the system program, which in the common RAM 13, in the external memory device 11f (step 402), and waits to be informed of output completion from the CPU 11a (step 403).

When a command for save request is received from the supplementary CPU 12a, the main CPU 11a outputs the part of the system program $SPR_S$ in the common RAM 13 to the external memory device 11f as simple data, informs the supplementary CPU 12a, via the common RAM 13, of the fact that output is completed (steps 303, 304), and thereafter waits to be informed of save completion or for a save request by the supplementary CPU 11a (steps 305, 306).

When informed by the CPU 11a of the completion of output, the supplementary CPU 12a determines whether processing for saving the system program SPR$_S$ has been completed (step 404). If save processing has not been completed, the CPU 12a repeats processing from step 401 onward.

When the supplementary CPU 12a issues a save request to the main CPU 11a at step 402 as a result of repeating processing, a "YES" answer is received at step 306 and the CPU 11a of the main system repeats processing from step 303 onward.

When saving of the system program SPR$_S$ is subsequently completed by continuing the foregoing processing, the supplementary CPU 12a informs the main system 11, via the common RAM 13, of the fact that saving of the system program has been completed, and terminates saving processing (step 405).

Meanwhile, the CPU 11a of the main system renders a "YES" decision at step 305 in response to being informed of the completion of the saving operation. Therefore, in accordance with the saving program contained in the system program SPR$_M$ stored in the RAM 11c, the CPU 11a subsequently saves its own system program SPRM in the external memory device and ends processing (step 307).

Thus, in accordance with the present invention as described above, loading and saving of the system program for the supplementary CPU can be accomplished without providing the supplementary CPU board with a ROM.

Further, in accordance with the present invention,

EP 0 362 403 A1

at loading the system program is stored in the RAM of
the supplementary CPU, and at saving the system program
is transferred to the common RAM in small increments and
the main system is requested to output the system
program to the external memory device. By repeating the
foregoing processing, the entire system program on the
side of the supplementary CPU is saved. As a result, it
is unnecessary for the main system to see the entire RAM
area on the side of the supplementary CPU, thus making
it possible to enlarge the RAM area on the supplementary
CPU side. Moreover, since the main system need not know
the memory configuration on the side of the
supplementary CPU and the configuration of the system
files, maintenance can be performed with ease.

CLAIMS:

1.   A method of saving a system program characterized by:

providing a common RAM so as to be accessible by both a CPU of a main system of a computer configuration and a supplementary CPU in order to add a separate CPU board to the main system;

transferring, by a saving program on the side of the supplementary CPU, a part of system program of the supplementary CPU itself from a RAM to the common RAM when a system program save request is generated;

then requesting that the main system output the system program in said common RAM to the external memory device;

outputting the system program in the common RAM to the external memory device as simple data by the CPU of the main system upon receiving the request; and

subsequently saving the system program on the side of the supplementary CPU in the external memory device by repeating the foregoing processing.

2.   A method of saving a system program according to claim 1, characterized in that after saving of the system program on the side of the supplementary CPU is completed, the supplementary CPU informs the main system of the completion of saving, whereby the saving program on the side of the main system outputs its own system program to the external memory device to save the same.

# FIG. I

11 MAIN SYSTEM

SUPPLEMENTARY CPU BOARD
12

CPU — 11a

CPU — 12a

PLDм

11d

KEYBOARD

ROM — 11b

12b

SPRs

RAM

11e — CRT

SPRм
RAM — 11c

13

FD    DKC

DISK CONTROLLER

COMMON RAM

EXTERNAL MEMORY DEVICE

11f

11g

DI/DO    WKS    DI/DO

14    15

12c

EP 0 362 403 A1

# FIG.2

TRANSITION
ADDRESS   A$\alpha$

AS1
COMMON RAM
ADDRESS SPACE

AS2
RAM ADDRESS
SPACE

A$n$

# FIG.3

| FIG.4(A) | FIG.4(B) |
|----------|----------|

# FIG.5

| FIG.6(A) | FIG.6(B) |
|----------|----------|

# FIG. 4 (A)

```
         ( EXISTING SYSTEM )
                  │                        101
                  ▼
        ┌─────────────────────────────────────────┐
        │              POWER ON                     │
        └─────────────────────────────────────────┘
                  │
                  ▼
         ┌──────────────────────┐
         │ PERFORM SELF-DIAGNOSIS│──── 102
         └──────────────────────┘
                  │
        103 ──     ▼          NO
          ╱ NORMAL ? ╲─────────────► SYSTEM ERROR
          ╲          ╱
              │ YES
              ▼
       ┌──────────────────┐
       │ LOAD SYSTEM PROGRAM│──── 104
       │ FROM FLOPPY DISK   │        105
       └──────────────────┘
              │
              ▼
   ┌─────────────────────────────────────┐
   │ WRITE DIAGNOSTIC/LOADING PROGRAM FOR │
   │ SEPARATE BOARD FROM FD TO COMMON RAM │
   └─────────────────────────────────────┘
              │                106
              ▼
      ┌──────────────────┐
      │ SEND WAKE-UP SIGNAL TO│────── WKS
      │ SEPARATE CPU BOARD    │
      └──────────────────┘      DIAGNOSTIC
              │                  RESULTS
              ▼
   NO  ╱ NOTIFICATION OF DIAGNOSTIC ╲── 107
  ◄────╲  RESULTS RECEIVED ?        ╱
       108 │ YES
           ▼             NO
       ╱ NORMAL ? ╲──────────► SYSTEM ERROR
       ╲          ╱
           │ YES      LOADING REQUEST
           ▼
   NO ╱ LOADING REQUESTED ? ╲──── 109
  ◄───╲                      ╱
          │ YES
          ▼                    110
  ┌─────────────────────────────────┐
  │ WRITE SYSTEM PROGRAM FOR SEPARATE│
  │ BOARD FROM FD TO COMMON RAM      │  LOADING
  └─────────────────────────────────┘  COMPLETED
          │
          ▼
  NO ╱ NOTIFICATION OF COM- ╲──── 111
 ◄───╲ PLETION RECEIVED ?    ╱
          │ YES
          ▼
       ( END )
```

BASED ON
PROGRAM
IN ROM

# F I G . 4 (B)

SEPARATE
CPU BOARD

101

RECEIVE WAKE-UP SIGNAL — 201

EXECUTE FROM TRANSITION ADDRESS
OF COMMON RAM AND PERFORM
SELF-DIAGNOSIS — 202

WSK

DIAGNOSTIC
RESULTS          INFORM OF DIAGNOSTIC RESULTS — 203

NORMAL ?  — 204
SYSTEM ◄── NO
ERROR
YES

LOADING REQUEST   REQUEST LOADING OF SYSTEM
PROGRAM FROM FD — 205

206
TRANSFER SYSTEM PROGRAM
IN COMMON RAM TO
LOADING       PREDETERMINED ADDRESS
COMPLETED

207
LOADING COMPLETED ?  NO
YES

INFORM OF COMPLETION — 208

END

EP 0 362 403 A1

# FIG. 6 (A)

```
        ┌─────────────┐
        │  EXISTING   │
        │   SYSTEM    │
        └──────┬──────┘
               │                              SAVE REQUEST
               │                              GENERATED
               ▼          301
    ┌────────────────────────────┐
    │ INFORM SUPPLEMENTARY CPU,   │
    │ VIA COMMON RAM, OF          │
    │ RECEIPT OF SAVE REQUEST     │
    └──────────────┬─────────────┘
                   │                          SAVE REQUEST
         NO    ◄───┴── 302
            ◄  SAVE REQUEST  ►
               RECEIVED ?
                   │ YES                       SAVE REQUEST
                   ▼
        ┌────────────────────┐  303
        │ OUTPUT PROGRAM IN  │
        │ COMMON RAM TO FD   │  304
        └──────────┬─────────┘
    ┌────────────────────────────────┐       OUTPUT
    │ INFORM OF COMPLETION OF OUTPUT │        COMPLETED
    └──────────────┬─────────────────┘
                   │        305
              ◄ SAVE COMPLETED ? ► YES
                   │ NO
        306  NO
            ◄  SAVE REQUEST  ►
               RECEIVED ?                      END OF SAVE
                   │ YES
       307
        ┌────────────────────────────┐
        │ SAVE OWN SYSTEM PROGRAM     │
        │        ON FD                │
        └──────────────┬─────────────┘
                       ▼
                ┌─────────────┐
                │ END OF SAVE │
                │ PROCESSING  │
                └─────────────┘
```

# FIG. 6 (B)

SUPPLEMENTARY
SYSTEM

SAVE REQUEST
GENERATED

YES

401

TRANSFER SYSTEM PROGRAM TO
BE SAVED TO COMMON RAM

402

SAVE REQUEST
SAVE REQUEST

REQUEST THAT SYSTEM PROGRAM
IN COMMON RAM BE SAVED
ON FD

WAIT FOR NOTIFICATION OF
COMPLETION OF OUTPUT

403

OUTPUT
COMPLETED

404

SAVE COMPLETED ?

NO

YES

405

SAVE
COMPLETED

INFORM OF COMPLETION OF
SYSTEM PROGRAM SAVE

END OF SAVE
PROCESSING

# FIG. 7

11 EXISTING SYSTEM

SEPARATE CPU BOARD
12

CPU — 11a

CPU — 12a

11d

PLDM

KEYBOARD

ROM — 11b

SPRM

11e — CRT

RAM — 11c

13

PLDs

SPRs

COMMON RAM

FD

DKC

DISK CONTROLLER

EXTERNAL MEMORY DEVICE

11f

11g

DI/DO

WKS

12c

DI/DO

EP 0 362 403 A1

# INTERNATIONAL SEARCH REPORT

International Application No PCT/JP89/00228

## I. CLASSIFICATION OF SUBJECT MATTER (if several classification symbols apply, indicate all) 6

According to International Patent Classification (IPC) or to both National Classification and IPC

Int. Cl$^4$  G06F12/16, 15/16

## II. FIELDS SEARCHED

### Minimum Documentation Searched 7

| Classification System | Classification Symbols |
|---|---|
| IPC | G06F12/16, 15/16 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 60-254362 (Fujitsu Ltd.) 16 December 1985 (16. 12. 85) P.2, lower right column, line 1 to p.4, lower left column, line 18 (Family: none) | 1-2 |
| A | JP, A, 61-134859 (Fujitsu Ltd.) 21 June 1986 (21. 06. 86) P.2, lower right column, line 1 to p.4, upper right column, line 15 (Family: none) | 1-2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| May 17, 1989 (17. 05. 89) | May 29, 1989 (29. 05. 89) |
| International Searching Authority | Signature of Authorized Officer |
| Japanese Patent Office | |

Form PCT ISA 210 (second sheet) (January 1985)